(19) Europäisches Patentamt
European Patent Office
Office européen des brevets

(11) **EP 4 575 566 A1**

(12) **EUROPEAN PATENT APPLICATION**
published in accordance with Art. 153(4) EPC

(43) Date of publication:
**25.06.2025 Bulletin 2025/26**

(21) Application number: **22956829.0**

(22) Date of filing: **30.08.2022**

(51) International Patent Classification (IPC):
***G01S 7/486*** *(2020.01)*

(52) Cooperative Patent Classification (CPC):
**G01S 7/486**

(86) International application number:
**PCT/CN2022/115987**

(87) International publication number:
**WO 2024/044997 (07.03.2024 Gazette 2024/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Shenzhen Yinwang Intelligent Technologies Co., Ltd.**
**Shenzhen, Guangdong 518129 (CN)**

(72) Inventors:
• **ZHANG, Shaopeng**
**Shenzhen, Guangdong 518129 (CN)**
• **LIN, Jiao**
**Shenzhen, Guangdong 518129 (CN)**
• **LIU, Jun**
**Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **OPTICAL RECEIVING MODULE AND RECEIVING SYSTEM, AND DETECTION APPARATUS AND TERMINAL DEVICE**

(57) An optical receiving module, a receiving system, a detection apparatus, and a terminal device are provided, to resolve impact of stray light on an echo light beam in the conventional technology. The optical receiving module, the receiving system, the detection apparatus, and the terminal device are applied to the fields of autonomous driving, intelligent driving, assisted driving, connected vehicles, or the like. The optical receiving module includes a first optical assembly, a stop, and a second optical assembly. The stop is located on an image-space focal plane of the first optical assembly, or is located at a preset distance from an image-space focal plane of the first optical assembly. The first optical assembly is configured to focus an echo light beam, and a focused echo light beam is emitted into the second optical assembly through the stop. The second optical assembly is configured to propagate the received echo light beam to a detection module. Because the focused echo light beam has a small light beam radius, the stop is placed on the image-space focal plane of the first optical assembly or at the preset distance from the image-space focal plane. A light transmission area of the stop may be set to be small, so that stray light can be blocked from passing as much as possible, thereby helping reduce or eliminate stray light entering the detection module.

FIG. 2

**Description**

**TECHNICAL FIELD**

This application relates to the field of optical technologies, and in particular, to an optical receiving module, a receiving system, a detection apparatus, and a terminal device.

**BACKGROUND**

With development of science and technology, intelligent terminals such as intelligent transportation equipment, intelligent home devices, robots, and vehicles are gradually entering people's daily life. A lidar can sense a surrounding environment, and then the lidar can identify and track a moving object and identify a static object based on sensed environment information. Therefore, the lidar plays an increasingly important role in the intelligent terminal.

In an actual application scenario, when the lidar senses a surrounding environment, stray light is inevitably doped into received signal light. The stray light causes impact (or referred to as interference) on normal signal light, and consequently, detection accuracy of the lidar is reduced.

In conclusion, how to reduce or eliminate the stray light is an urgent technical problem to be resolved currently.

**SUMMARY**

This application provides an optical receiving module, a receiving system, a detection apparatus, and a terminal device, to reduce or eliminate stray light received by an optical receiving system.

According to a first aspect, this application provides an optical receiving module. The optical receiving module includes a first optical assembly, a stop (or referred to as a photoextinction stop), and a second optical assembly, where the stop is located on an image-space focal plane of the first optical assembly, or is located at a preset distance from an image-space focal plane of the first optical assembly; the first optical assembly is configured to focus an echo light beam, and a focused echo light beam is emitted into the second optical assembly through the stop; and the second optical assembly is configured to propagate the received echo light beam to a detection module.

Based on the foregoing solution, the echo light beam is focused on the image-space focal plane of the first optical assembly, and the focused echo light beam has a small light beam radius. Therefore, the stop is placed on the image-space focal plane of the first optical assembly or at a preset distance from the image-space focal plane, so that stray light other than the echo light beam can be blocked (or suppressed) as much as possible, thereby helping reduce or eliminate stray light entering the detection module. When the optical receiving module is applied to a detection apparatus, detection accuracy of the detection apparatus can be improved.

In a possible implementation, the stop includes at least one light transmission area; and the light transmission area is used for pass-through of the focused echo light beam.

The focused echo light beam may pass through the light transmission area of the stop. The echo light beam has a small light beam radius on the image-space focal plane of the first optical assembly. Therefore, the stop is located on the image-space focal plane of the first optical assembly, and a small light transmission area may be set, so that stray light can be blocked from passing as much as possible while it is ensured that the echo light beam passes as possible.

For example, a shape of the light transmission area may be an ellipse, and a ratio of a major axis to a minor axis of the ellipse is greater than or equal to 1 and less than or equal to 4.

When a light spot of the echo light beam is an ellipse, an elliptic light transmission area is set, so that a loss of the echo light beam is small, and stray light is blocked as much as possible. Generally, intensity (or referred to as energy density) of a middle part of the light spot of the echo light beam is greater than intensity (or referred to as energy density) of an edge part. Therefore, the elliptic light transmission area helps further suppress stray light.

For example, the shape of the light transmission area may alternatively be a circle.

When the light spot of the echo light beam is a circle, a circular light transmission area is set, so that a loss of the echo light beam is small, and stray light is blocked as much as possible.

In a possible implementation, a central location of the light transmission area is related to an incident angle at which the echo light beam is emitted into the first optical assembly.

Specifically, the central location of the light transmission area and the incident angle at which the echo light beam is emitted into the first optical assembly satisfy Formula 1:

$$S = f \times \tan\theta \quad \text{Formula 1}$$

f is an equivalent focal length of the first optical assembly, θ is the incident angle at which the echo light beam is emitted into the first optical assembly, and S is the central location of the light transmission area.

A location of the light transmission area of the stop may be designed by using Formula 1.

In a possible implementation, the incident angle at which the echo light beam is emitted into the first optical assembly is a fixed value.

In a possible implementation, the optical receiving module further includes a third optical assembly; and

the third optical assembly is configured to adjust the incident angle at which the echo light beam is emitted into the first optical assembly to the fixed value.

Through the third optical assembly, the incident angle at which the echo light beam is emitted into the first light beam may be adjusted, so that the echo light beam may be focused on the location of the light transmission area of the stop, and the focused echo light beam may be emitted into the second optical assembly through the light transmission area of the stop.

In a possible implementation, the stop includes two light transmission areas. Further, optionally, the two light transmission areas form an axisymmetric pattern.

Setting the two symmetric light transmission areas helps simplify a structure of the stop. In addition, setting the two symmetric light transmission areas helps simplify design complexity of the optical receiving module. For example, only a longitudinal incident angle of the first optical assembly needs to be considered.

In a possible implementation, the stop further includes a non-light transmission area, and the non-light transmission area is configured to reflect or absorb stray light other than the echo light beam.

The non-light transmission area of the stop may block or suppress stray light, to reduce or eliminate stray light entering the detection module.

In a possible implementation, the stop includes: at least one aperture is disposed on a non-transparent thin film, and the aperture is the light transmission area; or at least one aperture is disposed on a non-transparent plate, and the aperture is a light transmission area; or a non-light transmission area of a transparent thin film is coated with a non-transparent material; or a non-light transmission area of transparent glass is coated with a non-transparent material.

In a possible implementation, the non-transparent thin film includes a Mylar film; or the non-transparent material includes black ink.

The Mylar film is used as the stop, which facilitates production of the stop. In addition, the Mylar film has a stable size, straightness, excellent tearing resistance strength, heat resistance, cold resistance, moisture resistance, water resistance, chemical corrosion resistance, excellent insulation performance, excellent electrical performance, mechanical performance, heat resistance performance, and chemical resistance performance.

In a possible implementation, the shape of the light transmission area is consistent with a shape of a light spot of the focused echo light beam.

The shape of the light transmission area is set to be consistent with the shape of the light spot of the focused echo light beam, so that the echo light beam can pass through the light transmission area as much as possible, the echo light beam is not lost, and stray light can be blocked from passing as much as possible.

In a possible implementation, the first optical assembly includes at least one first lens; and a first surface of a first lens close to the stop is a concave surface, a second surface of the first lens close to the stop is a convex surface, the first surface is a surface that is of the first lens and that is close to the stop, and the second surface is a surface that is of the first lens and that is away from the stop.

Through the first optical assembly, the echo light beam from the third optical assembly can be collected as much as possible, so that a loss of the echo light beam can be reduced.

In a possible implementation, the second optical assembly includes at least one second lens; and a third surface of a second lens close to the stop is a concave surface, a fourth surface of the second lens close to the stop is a convex surface, the third surface is a surface that is of the second lens and that is close to the stop, and the fourth surface is a surface that is of the second lens and that is away from the stop.

Through the second optical assembly, the echo light beam from the stop can be collected as much as possible, so that a loss of the echo light beam can be reduced.

In a possible implementation, the second optical assembly further includes a reflection assembly. For example, the reflection assembly includes a reflective prism or a reflective mirror.

A propagation direction of the echo light beam may be changed by using the reflection assembly, to fold an optical path of the echo light beam. This helps reduce an optical distance of the echo light beam in a direction, thereby helping reduce a length of the optical receiving module in the direction, and further helping miniaturize the optical receiving module.

According to a second aspect, this application provides a receiving system, including a detection module and the first aspect or any one of the optical receiving modules in the first aspect, and the detection module is configured to detect an echo light beam from the optical receiving module.

In a possible implementation, the detection module is configured to: receive the echo light beam from the optical receiving module, and perform optical-to-electrical conversion on the echo light beam to obtain a first electrical signal, where the first electrical signal is used to determine association information of a target in a detection area.

In a possible implementation, the detection module is located on an image-space focal plane of a second optical assembly.

The detection module is disposed on the image-space focal plane of the second optical assembly, so that a large quantity of echo light beams can be received on a single pixel of the detection module, thereby helping further improve detection accuracy.

According to a third aspect, this application provides a detection apparatus. The detection apparatus includes a transmitting system and the second aspect or any one of the receiving systems in the second aspect.

The transmitting system is configured to transmit a signal light beam, and the signal light beam is reflected by a target in a detection area to obtain the echo light beam.

In a possible implementation, the detection apparatus further includes a scanning system, where the scanning system is configured to reflect the signal light beam from the transmitting system to the detection area, and/or reflect the echo light beam to the receiving system.

According to a fourth aspect, this application provides a terminal device, where the terminal device includes a control apparatus and the third aspect or any one of the detection apparatuses according to the third aspect.

For technical effects that can be achieved in any one of the second aspect to the fourth aspect, refer to the foregoing descriptions of the beneficial effects in the first aspect. Details are not described herein again.

## BRIEF DESCRIPTION OF DRAWINGS

FIG. 1 is a diagram of an application scenario according to this application;

FIG. 2 is a diagram of a structure of an optical receiving module according to this application;

FIG. 4 is a diagram of a structure of a first optical assembly according to this application;

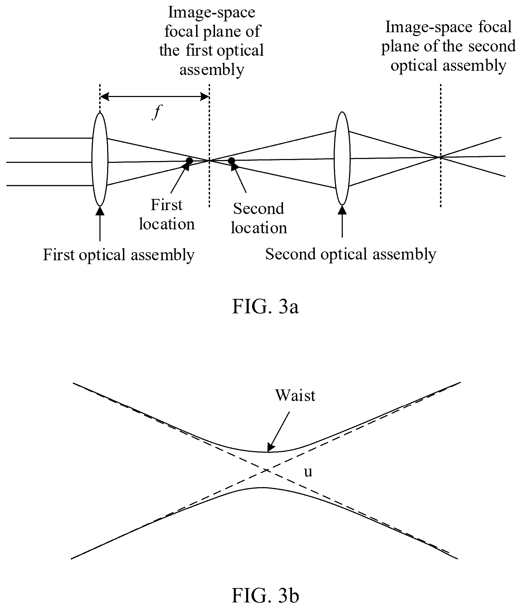

FIG. 3a is a diagram of an optical principle of secondary imaging according to this application;

FIG. 3b is a diagram of a light beam radius of an echo light beam according to this application;

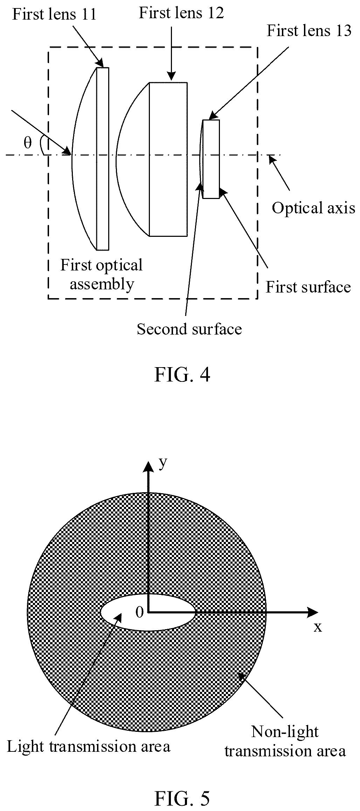

FIG. 5 is a diagram of a structure of a stop according to this application;

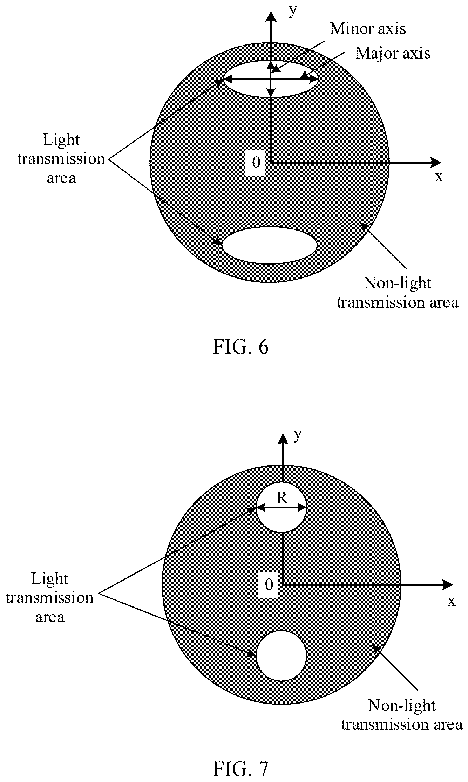

FIG. 6 is a diagram of a structure of another stop according to this application;

FIG. 7 is a diagram of a size of a light transmission area of another stop according to this application;

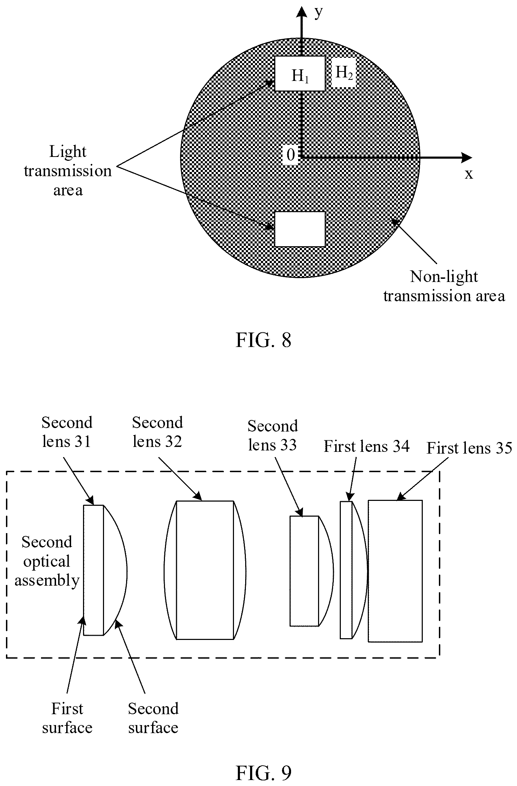

FIG. 8 is a diagram of a size of a light transmission area of still another stop according to this application;

FIG. 9 is a diagram of a structure of a second optical assembly according to this application;

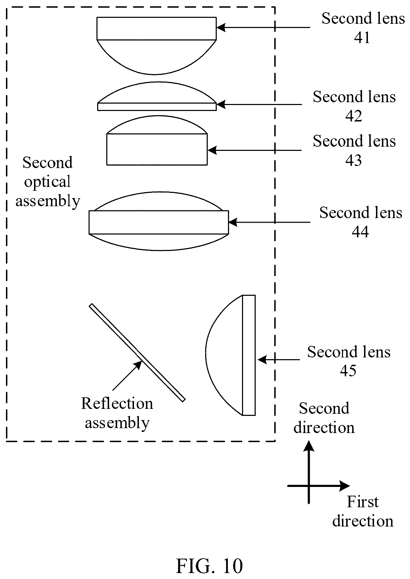

FIG. 10 is a diagram of a structure of another second optical assembly according to this application;

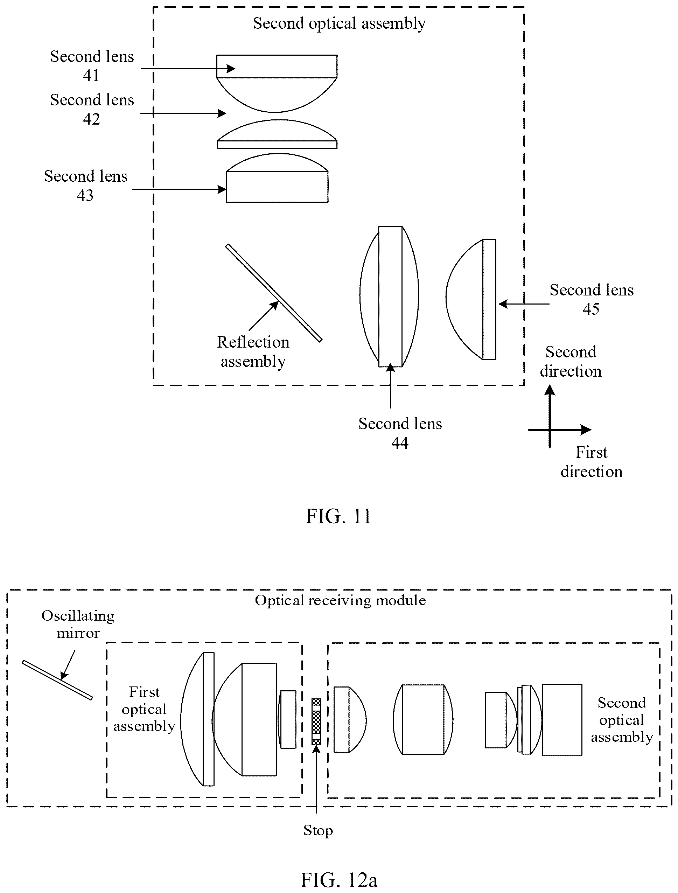

FIG. 11 is a diagram of a structure of another second optical assembly according to this application;

FIG. 12a is a diagram of a structure of another optical receiving module according to this application;

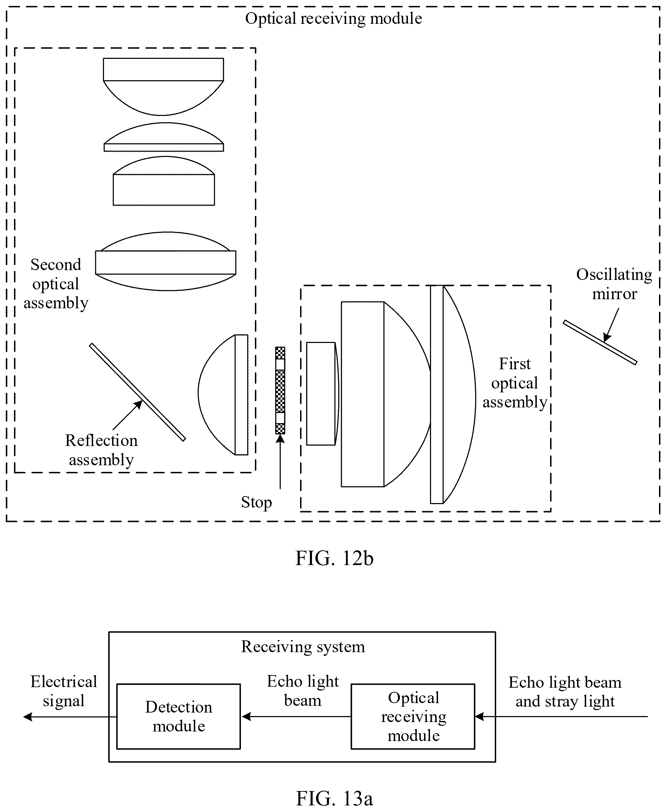

FIG. 12b is a diagram of a structure of another optical receiving module according to this application;

FIG. 13a is a diagram of an architecture of a receiving system according to this application;

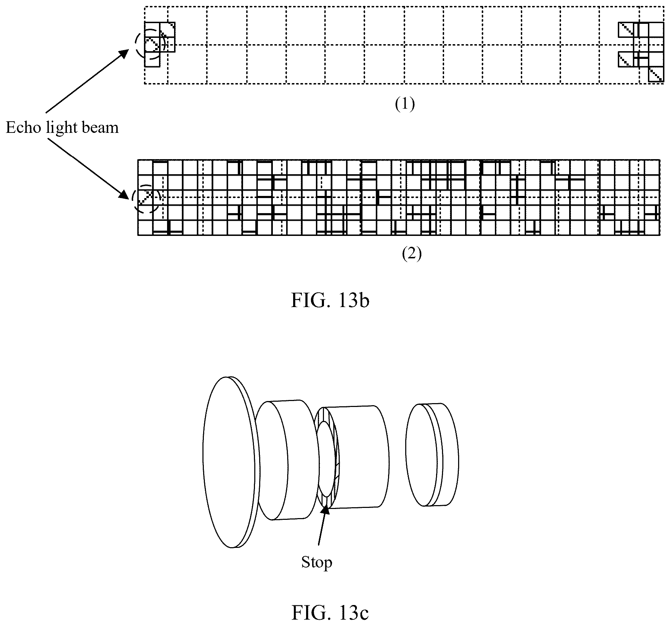

FIG. 13b is a diagram of energy of simulated stray light received by a detection module according to this application;

FIG. 13c is a diagram of a structure of a receiving system according to a conventional technology;

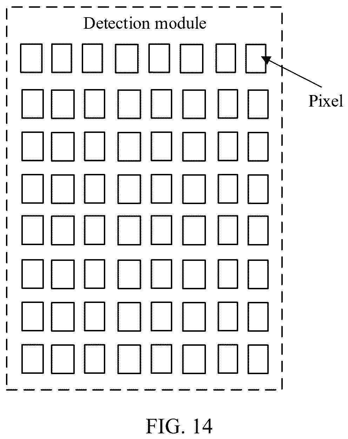

FIG. 14 is a diagram of a structure of a detection module according to this application;

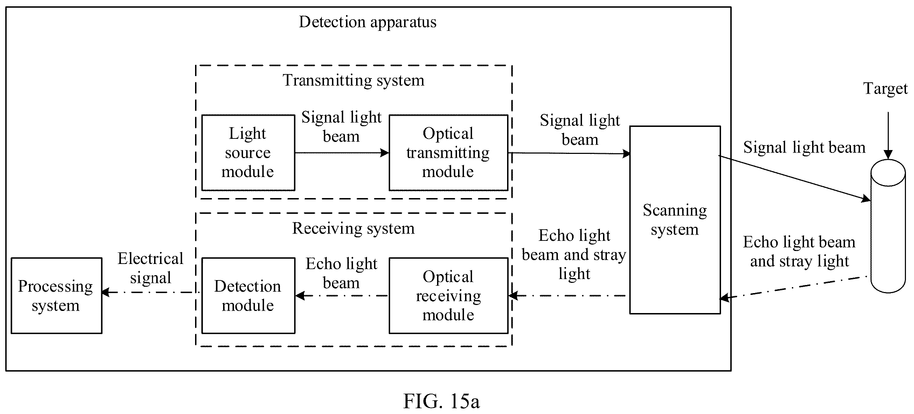

FIG. 15a is a diagram of an architecture of a detection apparatus according to this application;

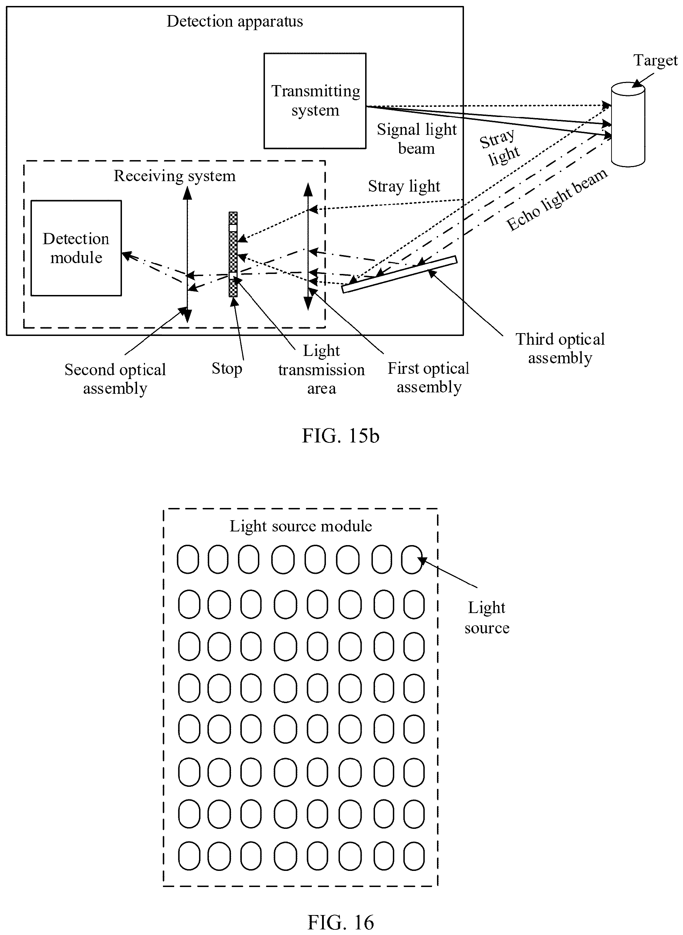

FIG. 15b is a diagram of an optical path in a detection apparatus according to this application;

FIG. 16 is a diagram of a structure of a light source module according to this application; and

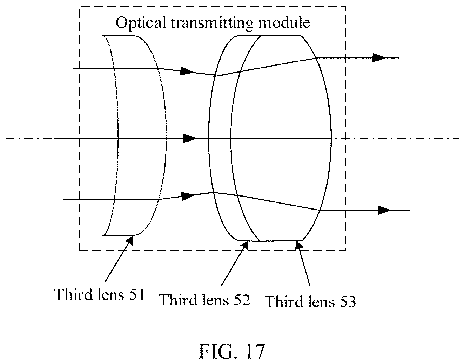

FIG. 17 is a diagram of a structure of an optical transmitting module according to this application.

## DESCRIPTION OF EMBODIMENTS

The following describes in detail embodiments of this application with reference to accompanying drawings.

The following describes possible application scenarios of this application.

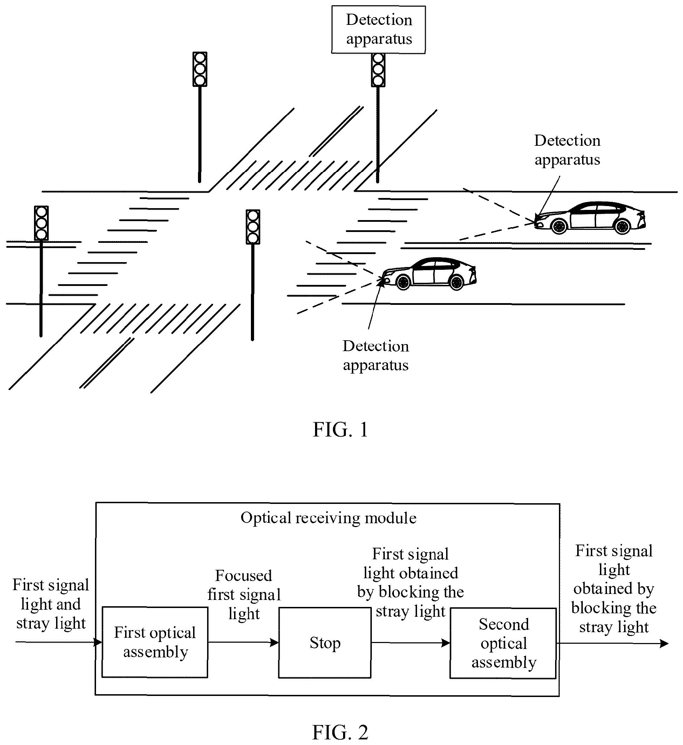

In a possible implementation, an optical receiving module may be integrated into a detection apparatus, and the detection apparatus may be installed on a vehicle. FIG. 1 is an example diagram of a possible application scenario of this application. In this application scenario, a detection apparatus is installed on a front part of a vehicle. It may be understood that the detection apparatus may alternatively be installed on another location of the vehicle, for example, in any one or more directions of the four directions: front, rear, left, and right, to capture information about an environment around the vehicle. The detection apparatus may be a lidar.

In a possible application scenario, a working principle of the detection apparatus is as follows: The detection apparatus transmits a signal light beam to a detection area. If a target exists in the detection area, the target may reflect the received signal light back to the detection apparatus (where the reflected light beam may be referred to as an echo light beam), and then the detection apparatus determines association information of the target based on the echo light beam. Specifically, the detection apparatus may obtain, in real time or periodically, longitude and latitude, a speed, and an orientation of the vehicle, or association information (for example, a distance of a target, a speed of the target, and/or a posture of the target) of the target (for example, another surrounding vehicle, a pedestrian, or an obstacle) in a specific range. Further, optionally, the detection apparatus may send the obtained information to a control apparatus in the vehicle, so that the control apparatus performs vehicle route planning and the like based on the obtained information. For example, a location of the vehicle may be determined by using the longitude and the latitude. Alternatively, a traveling direction and a destination of the vehicle in a future period of time are determined by using the speed and the orientation. Alternatively, a quantity of obstacles around the vehicle, a density of the obstacles, and the like are determined by using a distance to a surrounding object. Further, optionally, assisted driving, autonomous driving, or the like of the vehicle may be implemented by combining a function of an advanced driving assistance system (advanced driving assistant system, ADAS).

It should be understood that the foregoing application scenario is merely an example. The optical receiving module provided in this application may be further used in another possible scenario, but is not limited to the scenario shown in the foregoing example. For example, the detection apparatus integrated with the optical receiving module provided in this application may be further installed on an uncrewed aerial vehicle, and is used as an airborne detection apparatus. For another example, the detection apparatus integrated with the optical receiving module provided in this application may alternatively be installed in a roadside unit (road side unit, RSU), and used as a roadside traffic detection apparatus. Refer to FIG. 1. Intelligent vehicle-road cooperative communication and the like may be implemented. For another example, the detection apparatus integrated with the optical receiving module provided in this application may alternatively be installed on an automated guided vehicle (automated guided vehicle, AGV). The AGV is a transport vehicle equipped with an electromagnetic or optical automatic navigation apparatus, capable of driving along a specified navigation path, and having security protection and various load-moving functions. For another example, the optical receiving module may be further applied to a camera (camera). These are not listed herein one by one. It should be noted that the application scenarios described in this application are intended to describe the technical solutions in this application more clearly, and do not constitute a limitation on the technical solutions provided in this application.

For example, the foregoing application scenario may be applied to the fields of self-driving, autonomous driving, assisted driving, intelligent driving, connected vehicles, security monitoring, biomedical, surveying and mapping (for example, three-dimensional drawing), or the like.

As described in the background, when sensing a surrounding environment, a lidar inevitably receives stray light when receiving an echo light beam, and the stray light causes interference to the echo light beam. As a result, detection accuracy is reduced.

In view of the foregoing problem, this application provides an optical receiving module. The optical receiving module may reduce or eliminate, as much as possible, stray light entering a detection module, to reduce or eliminate interference of the stray light to an echo light beam.

Based on the foregoing content, the following specifically describes the optical receiving module provided in this application with reference to the accompanying drawings.

FIG. 2 is a diagram of a structure of an optical receiving module according to this application. The optical receiving module may include a first optical assembly, a stop, and a second optical assembly. In a possible implementation, the stop is located on an image-space focal plane of the first optical assembly. In another possible implementation, the stop is located at a preset distance from an image-space focal plane of the first optical assembly, and the preset distance needs to meet the following requirement: An echo light beam can pass through the stop as much as possible, and stray light is blocked by the stop as much as possible. It may alternatively be understood as that the stop is located at a first location in front of the image-space focal plane of the first optical assembly, and a distance between the first location and the image-space focal plane is equal to the preset distance; or the stop is located at a second location behind the image-space focal plane of the first optical assembly, and a distance between the second location and the image-space focal plane is the preset distance. Refer to FIG. 3a. In other words, the stop may alternatively be near the image-space focal plane of the first optical assembly. It may be understood that structures of the first optical assembly and the second optical assembly in FIG. 3a are merely examples. For a possible structure of the first optical assembly and a possible structure of the second optical assembly, refer to the following related descriptions. Details are not described herein again. The first optical assembly is configured to focus the echo light beam, and a focused echo light beam is emitted into the second optical assembly through the stop. It may be understood that the stop is used for pass-through of the focused echo light beam, and is used to block (or suppress) stray light other than the echo light beam from passing through the stop. The second optical assembly is configured to propagate the received echo light beam to a detection module. Specifically, the echo light beam that passes through the stop is a diverging light beam on a propagation optical path of the second optical assembly, and the second optical assembly may refocus the echo light beam that passes through the stop to the detection module. The echo signal is light reflected by a target and is a valid signal. The stray light is light that is not required but arrives at the detection module after being propagated. For example, the stray light includes but is not limited to background light (or referred to as ambient light), and/or stray light emitted from a transmitting system and reflected back to a receiving system by a target, and/or stray light generated by reflecting an echo light beam for a plurality of times by another structural part between the stop and a housing of the detection apparatus.

It may be understood that, after the echo light beam is focused by the first optical assembly, a beam waist is at the image-space focal plane of the first optical assembly. Refer to FIG. 3b. The beam waist is a place at which a radius of a light beam radius (used to measure horizontal extension of the light beam) of the echo light beam is the smallest in a propagation direction. A light beam radius at the place with the smallest light beam radius is a beam waist radius.

Based on the foregoing optical receiving module, the echo light beam is focused on the image-space focal plane of the first optical assembly, and the focused echo light beam has a small light beam radius. Therefore, the stop is placed on the image-space focal plane of the first optical assembly or at the preset distance from the image-space focal plane, and a light transmission area of the stop may be set to be small, so that stray light other than the echo light beam can be blocked (or suppressed) from passing as much as possible (refer to FIG. 15b), thereby helping to reduce or eliminate stray light entering the detection module. When the optical receiving module is applied to a detection apparatus, detection accuracy of the detection apparatus can be improved.

The following separately describes the function components and structures shown in FIG. 2, to provide an example of a specific implementation solution.

1. First optical assembly

In a possible implementation, the first optical assembly includes at least one first lens. FIG. 4 is a diagram of a structure of a first optical assembly according to this application. In this example, the first optical assembly includes three first lenses: a first lens 11, a first lens 12, and a first lens 13. The first lens 13 is a first lens close to the stop, a first surface of the first lens 13 is a concave surface, and a second surface of the first lens 13 is a convex surface. The first surface is a surface that is of the first lens and that is close to the stop, and the second surface is a surface that is of the first lens and that is away from the stop. In this way, the first optical assembly can collect as many echo light beams as possible.

It may be understood that the foregoing structure of the first optical assembly is merely an example. A quantity of first lenses included in the first optical assembly in this application may be less than or greater than that in FIG. 4. This is not limited in this application.

It should be noted that the first lens may be a spherical lens or may be an aspheric lens. The spherical lens includes but is not limited to a double convex lens, a flat convex lens, a double concave lens, a flat concave lens, a concave-convex lens, and the like. The aspheric lens includes but is not limited to a cylindrical lens. For example, the first optical assembly includes a monolithic spherical lens, a monolithic aspheric lens, a combination of a plurality of spherical lenses, a combination of a plurality of aspheric lenses, a combination of a spherical lens and an aspheric lens, or the like. The combination of the plurality of spherical lenses or aspheric lenses helps improve imaging quality of the first optical assembly, and helps reduce an aberration of the first optical assembly. It may be understood that the first optical assembly may be rotationally symmetric or may be non-rotationally symmetric. This is not limited in this application. Rotational symmetry means that after the first optical assembly rotates around an optical axis of the first optical assembly by a specific angle (for example, 90°), the first optical assembly can change an optical path of an echo light beam in a same way as that before the rotation.

Further, optionally, a material of the first lens may be an optical material, for example, glass, resin, or crystal. When the material of the first lens is the resin, mass of the first optical assembly can be reduced. When the material of the first lens is the glass, imaging quality of the first optical assembly can be improved. To effectively suppress temperature drift, the first optical assembly includes at least one first lens made of a glass material. It should be understood that, when the first optical assembly includes at least three first lenses, materials of some first lenses may resin, materials of some first lenses are glass, and materials of some first lenses are crystal; or materials of some first lenses may be resin, and materials of some first lenses are glass; or materials of some first lenses may be resin, and materials of some first lenses are crystal; or materials of some first lenses may be glass, and materials of some first lenses may be crystal. Alternatively, materials of all first lenses may be glass; or materials of all first lenses may be resin; or materials of all first lenses may be crystal. This is not limited in this application.

2. Stop

In a possible implementation, the stop includes a non-light transmission area and at least one light transmission area. The light transmission area is used for pass-through of a focused echo light beam. The non-light transmission area is used to block (for example, reflect or absorb) stray light. The echo light beam has a small light beam radius on the image-space focal plane of the first optical assembly. Therefore, the stop is located on the image-space focal plane of the first optical assembly, and a small light transmission area may be set, so that stray light can be blocked from passing as much as possible while it is ensured that the echo light beam passes as possible.

For example, the stop may be provided with at least one aperture on a non-transparent thin film, or may be provided with at least one aperture on a non-transparent plate, and the at least one aperture is the light transmission area. The non-transparent thin film includes but is not limited to a Mylar film, a steel film, or the like. A stop provided with an aperture may also be referred to as an aperture stop (or referred to as a small aperture stop). The Mylar film is a polyester film, and has features of a stable size, straightness, excellent tearing strength, heat resistance, cold resistance, moisture resistance, water resistance, and chemical corrosion resistance, and has excellent insulation performance, excellent electrical performance, mechanical performance, heat resistance performance, chemical resistance performance, and the like.

For another example, in the stop, a non-light transmission area of the transparent thin film may be coated with a non-transparent material, or a non-light transmission area of transparent glass is coated with a non-transparent material. The non-transparent material includes but is not limited to black ink, black paint, or the like. Specifically, a required light transmission area may be printed on glass, a thin film, or the like by using a silkscreen technology, and the other area is coated with black ink or black paint (the area of the black ink or black paint is not transparent).

Based on the foregoing content, the following describes a central location, a shape, and a size of the light transmission area of the stop.

In a possible implementation, the central location of the light transmission area is related to an incident angle at which the echo light beam is emitted into the first optical assembly. Specifically, with reference to FIG. 4, the central location of the light transmission area and the incident angle at which the echo light beam is emitted into the first optical assembly satisfy Formula 1:

$$S = f \times \tan\theta \quad \text{Formula 1}$$

f is an equivalent focal length of the first optical assembly, $\theta$ is the incident angle at which the echo light beam is emitted into the first optical assembly, and S is the central location of the light transmission area.

For example, the central location of the light transmission area is represented by $(S_x, S_y)$, $S_x$ represents a horizontal coordinate of the central location of the light transmission area, and $S_y$ represents a vertical coordinate of the central location of the light transmission area. The horizontal coordinate represents coordinates of the central location in a third direction, and the vertical coordinate represents coordinates of the central location in a second direction. The third direction is perpendicular to a first direction, the third direction is further perpendicular to the second direction, and a plane xoy of the third direction and the second direction is perpendicular to the first direction.

$$S_x = f_x \times \tan\theta_x \quad \text{Formula 2}$$

$$S_y = f_y \times \tan\theta_y \quad \text{Formula 3}$$

$f_x$ is a transverse equivalent focal length of the first optical assembly, $\theta_x$ is a transverse incident angle at which the echo light beam is emitted into the first optical assembly, $f_y$ is a longitudinal equivalent focal length of the first optical assembly, and $\theta_y$ is a longitudinal incident angle at which the echo light beam is emitted into the first optical assembly. A transverse direction is the third direction, and a longitudinal direction is the second direction.

It should be noted that the horizontal coordinate of the central location of the light transmission area may alternatively be the same as a horizontal coordinate of a central location of the stop. For example, if coordinates of the central location of the stop are (0, 0), coordinates of the central location of the light transmission area are (0, $S_y$). The horizontal coordinate of the central location of the light transmission area is designed to be the same as the horizontal coordinate of the central location of the stop, which helps simplify an optical path design of the optical receiving module.

In a possible implementation, the incident angle $(\theta_x, \theta_y)$ at which the echo light beam is emitted into the first optical assembly is a fixed value. Specifically, the optical receiving module further includes a third optical assembly, configured to adjust the incident angle at which the echo light beam is emitted into the first optical assembly to the fixed value. It may alternatively be understood as that after the third optical assembly adjusts light beams that enter the optical receiving module from different directions, incident angles of the light beams that enter the first optical assembly are the same. It should be noted that the fixed value may be one value, for example, the fixed value may be (0°, 0°); or the fixed value may be two values, for example, (0°, 7.5°) and (0°, -7.5°). It should be noted that the fixed value is related to an emergent angle at which a signal light beam is emitted from a transmitting system. Specifically, the signal light beam is emitted from the transmitting system at a fixed emergent angle, and an echo light beam is obtained through reflection by a target. Reflection of the signal light beam by the target complies with a reflection law. An echo signal is reflected to the first optical assembly by using the third optical assembly. Reflection of the echo light beam by the third optical assembly also complies with the reflection law. For example, the third optical assembly includes but is not limited to an oscillating mirror.

FIG. 5 is a diagram of a structure of a stop according to this application. In this example, the stop includes a light transmission area, and a horizontal coordinate of a central location of the light transmission area is the same as a horizontal coordinate of a central location of the stop, that is, $S_x=0$. Specifically, an incident angle $\theta_y$ at which an echo light beam is emitted into the first optical assembly is 0°, and $S_y=f_y \times \tan\theta_y=0$. Correspondingly, coordinates of the central location of the light transmission area are (0, 0). It may alternatively be understood as that the light transmission area is located at a center of the stop. It may be understood that, in this example, a shape of the light transmission area is an ellipse. For a specific shape of the light transmission area, refer to the following related description. Details are not described herein again.

FIG. 6 is a diagram of a structure of another stop according to this application. In this example, the stop includes two symmetric light transmission areas, and horizontal coordinates of central locations of the two light transmission areas are the same as a horizontal coordinate of a central location of the stop, that is, $S_x=0$. Specifically, incident angles $\theta_y$ and $\theta_y$ at which the echo light beam is emitted into the first optical assembly are respectively equal to -7.5° and 7.5°, $S_y=f_y \times \tan\theta_y=f_y \times \tan 7.5°$, and $S_y=f_y \times \tan\theta_y=f_y \times \tan(-7.5°)$. Correspondingly, coordinates of a central location of one of the two light transmission areas are (0, $f_y \times \tan 7.5°$), and coordi-

nates of a central location of the other light transmission area are (0, $f_y \times \tan(-7.5°)$). It may be understood that, in this example, a shape of the light transmission area is also an ellipse. For a specific shape of the light transmission area, refer to the following related description. Details are not described herein again.

In a possible implementation, the shape of the light transmission area may be consistent with a shape of a light spot of the focused echo light beam. For example, the shape of the light spot of the focused echo light beam is an ellipse, and correspondingly, the shape of the light transmission area may also be an ellipse. For another example, the shape of the light spot of the focused echo light beam is a circle, and correspondingly, the shape of the light transmission area may also be a circle. For another example, the shape of the light spot of the focused echo light beam is a rectangle, and correspondingly, the shape of the light transmission area may also be a rectangle. For another example, the shape of the light spot of the focused echo light beam is a square, and correspondingly, the shape of the light transmission area may also be a square. It should be understood that the shape of the light transmission area may further be another regular or irregular shape. This is not limited in this application.

Further, optionally, a size of the light transmission area of the stop meets the following requirement: A loss of an echo light beam is reduced as much as possible, and stray light is suppressed as much as possible. The following example shows sizes of light transmission areas in three shapes.

Shape 1: The shape of the light transmission area is an ellipse.

With reference to FIG. 6, a ratio of a major axis to a minor axis of the light transmission area is greater than or equal to 1 and less than or equal to 4.

For example, the major axis of the light transmission area is 1 millimeter (mm), and the minor axis of the light transmission area is 0.5 mm. It should be noted that an engineering error is allowed for both a length of the major axis and a length of the minor axis of the light transmission area. In addition, the size of the elliptic light transmission area provided above is merely an example. In actual application, the length of the major axis of the elliptic light transmission area may be greater than or less than the length of the major axis of the elliptic light transmission area provided above, and/or the length of the minor axis of the elliptic light transmission area may be greater than or less than the length of the minor axis of the elliptic light transmission area provided above. This is not limited in this application.

Shape 2: The shape of the light transmission area is a circle.

FIG. 7 is a diagram of a size of a light transmission area of another stop according to this application. A diameter R of the light transmission area of the stop is, for example, 0.8 mm. It should be noted that an engineering error is allowed for the diameter of the light transmission area. In this example, the stop includes two circular light transmission areas.

It may be understood that the size of the circular light transmission area provided above is merely an example. In actual application, the diameter of the circular light transmission area may alternatively be greater than the diameter of the circular light transmission area provided above. This is not limited in this application.

In a possible implementation, the shape of the light spot of the focused echo light beam on the image-space focal plane of the first optical assembly may be a circle, and the stop whose light transmission area is a circle may be disposed on the image-space focal plane of the first optical assembly. In this way, the size of the light transmission area may be reduced as much as possible, so that stray light is prevented as much as possible from passing through the stop, and the echo light beam may not be lost.

Shape 3: The shape of the light transmission area is a rectangle.

FIG. 8 is a diagram of a size of a light transmission area of another stop according to this application. In this example, a length $H_1$ of a first side of the light transmission area of the stop may be, for example, 0.8 mm, and a length $H_2$ of a second side may be, for example, 0.5 mm. It should be noted that an engineering error is allowed for both the length $H_1$ of the first side and the length $H_2$ of the second side of the light transmission area. In this example, the stop includes two rectangular light transmission areas.

It may be understood that the size of the rectangular light transmission area provided above is merely an example. In actual application, the length of the first side of the rectangular light transmission area may be greater than the length $H_1$ of the first side of the rectangular light transmission area provided above, and the length of the second side of the rectangular light transmission area may be greater than the length $H_2$ of the second side of the rectangular light transmission area provided above. This is not limited in this application.

It should be noted that the foregoing example is described by using an example in which the two light transmission areas included in the stop have a same shape. It may alternatively be understood as that the two light transmission areas of the stop provided in the foregoing example form an axisymmetric pattern. It should be understood that, when the stop includes a plurality of light transmission areas, shapes of the plurality of light transmission areas may be the same or may be different. For example, the stop includes two light transmission areas, where a shape of one light transmission area a circle, and a shape of the other light transmission area is an ellipse. For another example, the stop includes four light transmission areas, and shapes of the four light transmission areas may be all the same, or may be partially the same and partially different, or may be all different. In addition, when the stop includes a plurality of light transmission areas, sizes of the plurality of light transmission areas may be the same or may be different. This is not limited in this application.

In a possible implementation, a shape of the stop may be a circle, a square, or any other possible regular or irregular shape. This is not limited in this application. All shapes that can be assembled on a lens tube fall within the protection scope of this application. Further, optionally, a thickness of the stop may be 0.1 mm to 0.3 mm.

3. Second optical assembly

In a possible implementation, the second optical assembly is configured to focus, to the detection module, the echo light beam that passes through the stop, and the second optical assembly includes at least one second lens. The second lens may be a spherical lens or an aspheric lens. For descriptions of the spherical lens and the aspheric lens, refer to the foregoing related descriptions. Details are not described herein again.

FIG. 9 is a diagram of a structure of a second optical assembly according to this application. In this example, the second optical assembly includes five second lenses: a second lens 31, a second lens 32, a second lens 33, a second lens 34, and a second lens 35. The second lens 31 is a second lens close to the stop, a first surface of the second lens 31 is a concave surface, and a second surface of the second lens 31 is a convex surface. The first surface is a surface that is of the second lens and that is close to the stop, and the second surface is a surface that is of the second lens and that is away from the stop. In this way, the second optical assembly can collect as many echo light beams as possible.

Further, optionally, the second optical assembly further includes a reflection assembly. A propagation optical path of the echo light beam may be changed by using the reflection assembly, to fold the optical path of the echo light beam, so that an optical distance of the echo light beam in a specific direction may be reduced, and a volume of the optical receiving module can be reduced. For example, the reflection assembly includes a reflective prism (or referred to as a deflecting prism) or a reflective mirror. An included angle between the reflective mirror and the optical axis of the first optical assembly is 45°. The reflective prism may be, for example, an isosceles reflective prism. If the second optical assembly includes at least two second lenses, the reflection assembly may be located between any two adjacent second lenses. If the second optical assembly includes one second lens, the reflection assembly may be located between the first optical assembly and the second optical assembly.

FIG. 10 is a diagram of a structure of another second optical assembly according to this application. In this example, the second optical assembly includes five second lenses and a reflection assembly, and the five second reflective mirrors are respectively a second lens 41, a second lens 42, a second lens 43, a second lens 44, and a second lens 45. It may be determined, through simulation, that a spatial distance between the second lens 44 and the second lens 45 is large. Therefore, the reflection assembly may be disposed between the second lens 44 and the second lens 45. The echo light beam is propagated to the reflection assembly through the second lens 45, reflected to the second lens 44 by using the reflection assembly, and then propagated to the detection module through the second lens 44, the second lens 43, the second lens 42, and the second lens 41.

It should be noted that the reflection assembly may alternatively be disposed between two other adjacent second lenses. FIG. 11 is a diagram of a structure of another second optical assembly according to this application. In this example, the second optical assembly includes five second lenses and a reflection assembly, and the five second reflective mirrors are respectively a second lens 41, a second lens 42, a second lens 43, a second lens 44, and a second lens 45. The reflection assembly may be disposed between the second lens 43 and the second lens 44. The echo light beam is propagated to the reflection assembly through the second lens 45 and the second lens 44, then reflected by the reflection assembly to the second lens 43, and then propagated to the detection module through the second lens 43, the second lens 42, and the second lens 41.

The propagation optical path of the echo light beam may be changed from a first direction to a second direction by using the reflection assembly, to fold the optical path of the echo light beam in the first direction, thereby helping shorten an optical distance in the first direction, and further reducing a size of the second optical assembly in the first direction.

It may be understood that the foregoing three types of structures of the second optical assembly are merely examples. The second optical assembly in this application may include more second lenses than those in FIG. 9, or may include fewer second lenses than those in FIG. 10 and FIG. 11. This is not limited in this application. In addition, a location of the reflection assembly may alternatively be located at another possible location. The locations shown in FIG. 10 and FIG. 11 are merely examples. This is not limited in this application.

In a possible implementation, a material of the second lens may be the same as that of the first lens, or may be different from that of the first lens. This is not limited in this application. For a material of the at least one second lens included in the second optical assembly, refer to the foregoing description of the first lens. Details are not described herein again.

Based on the foregoing content, the following provides three specific implementations of the optical receiving module, to further facilitate understanding of the structure of the optical receiving module.

FIG. 12a is a diagram of a structure of another optical receiving module according to this application. The optical receiving module may include a first optical assembly, a stop, a second optical assembly, and a third optical assembly. In this example, the stop is located on an image-space focal plane of the first optical assembly. In this example, FIG. 4 is used as an example of the first optical assembly, FIG. 6 is used as an example of the stop, FIG. 9 is used as an example of the second optical assembly, and an oscillating mirror is used as an example of the third optical assembly. For more detailed descriptions of the first optical assembly, the stop, the second optical assembly, and the third optical assembly, refer to the foregoing related descriptions. Details are not described herein again.

Based on the foregoing optical receiving module, an angle obtained after stray light is reflected by the oscillating mirror may be different from an angle obtained after an echo light beam is reflected by the oscillating mirror. Therefore, an incident angle at which the echo light beam is emitted into the first optical assembly is different from an incident angle at which the stray light is emitted into the first optical assembly. When the echo light beam is emitted into the first optical assembly at a fixed incident angle, and the echo light beam is focused by the first optical assembly, a size of a focused echo light beam on the image-space focal plane of the first optical assembly is small. The stop is placed on the image-space focal plane of the first optical assembly, so that a light transmission area of the stop can be reduced as much as possible. In this way, the focused echo light beam can pass through the light transmission area, and stray light can be blocked as much as possible.

FIG. 12b is a diagram of a structure of another optical receiving module according to this application. The optical receiving module includes a first optical assembly, a second optical assembly, a stop, a reflection assembly, and a third optical assembly. In this example, FIG. 4 is used as an example of the first optical assembly, FIG. 6 is used as an example of the stop, FIG. 10 is used as an example of the second optical assembly, and an oscillating mirror is used as an example of the third optical assembly. For the first optical assembly, the second optical assembly, and the stop, refer to the foregoing related descriptions. Details are not described herein again.

Based on the foregoing optical receiving module, stray light entering the detection module can be blocked as much as possible, and a propagation direction of a received echo light beam may be changed by using the reflection assembly, to fold an optical path of the echo light beam. This helps reduce an optical distance of the echo light beam in a direction, thereby helping reduce a length of the optical receiving module in the direction, and further helping miniaturize the optical receiving module.

Based on the foregoing described structure and function principles of the optical receiving module, this application may further provide a receiving system. FIG. 13a is a diagram of an architecture of a receiving system according to this application. The receiving system may include a detection module and an optical receiving module. The detection module is configured to detect an echo light beam from the optical receiving module. Specifically, the detection module is configured to receive the echo light beam from the optical receiving module, and perform optical-to-electrical conversion on the echo light beam to obtain a first electrical signal, where the first electrical signal is used to determine association information of a target in a detection area. For the optical receiving module, refer to the description in any one of the foregoing embodiments, and details are not described herein again. Further, optionally, the association information of the target may include but is not limited to distance information of the target, an orientation of the target, a speed of the target, and/or grayscale information of the target.

In a possible implementation, the detection module is located on an image-space focal plane of a second optical assembly. In this way, a large quantity of echo light beams can be received on a single pixel of the detection module, thereby helping further improve detection accuracy.

FIG. 13b is an example diagram of energy of simulated stray light received by a detection module. (1) in FIG. 13b is energy distribution of the stray light obtained through simulation based on the receiving system shown in FIG. 13a, and (2) in FIG. 13b is energy distribution of stray light obtained through simulation based on a receiving system (refer to FIG. 13c) in the conventional technology. It can be learned from comparison between (1) and (2) in FIG. 13b that, in the receiving system based on the conventional technology, in addition to detecting an echo signal, the detection module further detects strong stray light, and the stray light is scattered on the entire detection module. Based on the receiving system in this application, an echo signal may enter the detection module through two light transmission areas of the stop, and stray light at other angles is blocked by a non-light transmission area of the stop. This can effectively eliminate stray light entering the detection module, thereby improving a capability of the optical receiving module to suppress the stray light.

It may be understood that the stop is usually parallel to a photosensitive surface of the detection module. In other words, an included angle between the stop and the photosensitive surface of the detection module is equal to 0 degrees. Based on this, a size of the light transmission area of the stop may be described with reference to the foregoing shape 1, shape 2, and shape 3, and details are not described herein again. When the angle between the stop and the photosensitive surface of the detection module is not equal to 0 degrees, to minimize impact of the stray light on signal light, the size of the light transmission area of the stop may be understood as that components in a third direction and a second direction meet relationships provided by the shape 1, the shape 2, and the shape 3. For details, refer to the foregoing related descriptions. Details are not described herein again.

For example, the detection module may include but is not limited to a photon detector (photon detector, PD), a positive intrinsic negative (positive intrinsic negative, PIN) photodiode (also referred to as a PIN junction diode), an avalanche photodiode (avalanche photodiode, APD), or a pixel array. A pixel in the pixel array may include one or more single-photon avalanche diodes (single-photon avalanche diodes, SPAD), a silicon photomultiplier (silicon photomultiplier, SiMP), or the like.

FIG. 14 is a diagram of a structure of a detection module according to this application. An example in which the detection module includes 8×8 pixels is used. It may be understood that a pixel array provided in FIG. 14 is merely an example, and a quantity of rows and a quantity of columns included in the pixel array are not limited in this application. For example, the pixel array may alternatively be a multi-row and one-column pixel array, or may be another multi-row and multiple-column pixel array, which is not listed one by one herein. In addition, a shape of the pixel in the pixel array may alternatively be another possible shape (for example, a circle, a square, or an ellipse). This is not limited in this application.

It should be noted that the pixels in the pixel array may be in a one-to-one correspondence with light sources in a light source array. For details about the light sources in the light source array, refer to the following related descriptions. Details are not described herein again.

Based on the foregoing described structure and function principles of the receiving system, this application may further provide a detection apparatus. FIG. 15a is a diagram of an architecture of a detection apparatus according to this application. The detection apparatus may include a transmitting system and a receiving system. The transmitting system is configured to transmit a signal light beam, where an echo light beam is obtained by reflecting the signal light beam on a target in a detection area. For the receiving system, refer to the description in any one of the foregoing embodiments, and details are not described herein again. In a possible implementation, the transmitting system includes a light source module, and further, the transmitting system further includes an optical transmitting module.

Based on the detection apparatus shown in FIG. 15a, for an optical path, refer to FIG. 15b. The transmitting system is configured to transmit a signal light beam. The signal light beam is reflected by a target to obtain an echo light beam. The echo light beam is focused at a stop after passing through a first optical assembly. A focused echo light beam has a small beam waist radius. The stop allows the focused echo light beam to pass through and blocks stray light other than the echo light beam, and a first signal that passes through the stop is refocused at the detection module through the second optical assembly.

The following separately describes the light source module and the optical transmitting module.

### 4. Light source module

In a possible implementation, the light source module may be, for example, a spot light source, or may be a light source array. For example, the spot light source or a light source in the light source array may be, for example, a diode pumped solid state laser (diode pumped solid state laser, DPSS), an optical fiber optical laser, a vertical cavity surface emitting laser (vertical cavity surface emitting laser, VCSEL), or an edge emitting laser (edge emitting laser, EEL).

FIG. 16 is a diagram of a structure of a light source module according to this application. In this example, the light source module includes an 8×8 light source array. It should be noted that the light source array may alternatively be one row or one column. The light source array shown in FIG. 16 is merely a possible example. The light source array may implement independent addressing. Independent addressing means that a light source in the light source array may be independently gated (or referred to as lit, turned on, or powered on), and the gated light source may be used to transmit a signal light beam. It may be understood that an addressing manner of the light source array is related to a physical connection relationship of the light source. For example, if light sources in a same column in the light source array are connected in series, and light sources in different columns are connected in parallel, the light sources (which may be referred to as linear light sources) may be gated by column. For another example, if light sources in a same row of the light source array are connected in series, and light sources in different rows are connected in parallel, the light sources (which may be referred to as linear light sources) may be gated by row. For another example, if all light sources in the light source array are connected in series, or light sources in a same column are connected in series and light sources in different columns are connected in parallel, or light sources in a same row are connected in series and light sources in different rows are connected in parallel, all light sources (which may be referred to as surface light sources) may be gated at a time.

It should be understood that a shape of the light source in the light source array may alternatively be another possible shape (for example, a circle, a square, or an ellipse). This is not limited in this application.

### 5. Optical transmitting module

In a possible implementation, the optical transmitting module is configured to propagate, to the detection area, the signal light beam transmitted by the light source module. Specifically, a divergence angle of the signal light beam transmitted by the light source module may be large, and there may be a light beam with poor astigmatism quality. The optical transmitting module may further collimate and shape signal light, so that the divergence angle of the signal light beam transmitted to the detection area is small, and a large quantity of signal light beams can be radiated to the detection area.

FIG. 17 is a diagram of a structure of an optical transmitting module according to this application. For example, the optical transmitting module includes three third lenses: a third lens 51, a third lens 52, and a third lens 53. It should be understood that a quantity of third lenses included in the optical transmitting module is merely an example. In this application, the quantity of third lenses included in the optical transmitting module may be greater than that in FIG. 17, or may be less than that in FIG. 17. For the third lens, refer to the descriptions of the first lens and the second lens. Details are not described herein again.

It should be noted that the detection apparatus in this application may further include another possible system. For example, the detection apparatus may further include a scanning system. Further, optionally, the detection apparatus further includes a processing system and the like. Refer to FIG. 15a.

The following describes the scanning system and the processing system respectively.

A. Scanning system

In a possible implementation, the scanning system is configured to reflect a signal light beam from the transmitting system to the detection area, and reflect an echo light beam from the detection area to the receiving system. The scanning system changes a scanning angle of the scanning system by rotating around a scanning axis, so that the scanning system reflects the signal light beam from the transmitting system to the detection area at different scanning angles, to implement scanning of the detection area, and reflects an echo light beam from the detection area to the receiving system, to implement detection of the detection area.

Specifically, the transmitting system and the receiving system may share a scanning system. The shared scanning system may be, for example, any one of a rotating mirror (for example, a quadrangle rotating mirror, a hexahedron rotating mirror, or an octahedron rotating mirror), a micro-electro-mechanical system (micro electro-mechanical system, MEMS) reflective mirror, or an oscillating mirror. Alternatively, the transmitting system and the receiving system each may correspond to a scanning system. For example, a scanning system corresponding to the transmitting system may be a rotating mirror, and a scanning system corresponding to the receiving system is also a rotating mirror. For another example, the scanning system corresponding to the transmitting system may be an oscillating mirror, and the scanning system corresponding to the receiving system is also an oscillating mirror. For another example, the scanning system corresponding to the transmitting system may be an MEMS mirror, and the scanning system corresponding to the receiving system is also an MEMS mirror. For another example, the scanning system corresponding to the transmitting system may be a rotating mirror, and the scanning system corresponding to the receiving system is also an MEMS mirror. For another example, the scanning system corresponding to the transmitting system may be a rotating mirror, and the scanning system corresponding to the receiving system is also an oscillating mirror. For another example, the scanning system corresponding to the transmitting system may be an MEMS mirror, and the scanning system corresponding to the receiving system is a rotating mirror. For another example, the scanning system corresponding to the transmitting system may be an MEMS mirror, and the scanning system corresponding to the receiving system may also be an oscillating mirror. Details are not listed herein.

It should be noted that a type of the scanning system is not limited in this application, and any structure that can implement propagating a signal light beam of the transmitting system to the detection area, and propagating an echo light beam from the detection area to the receiving system may be used. In addition, specific forms of the rotating mirror, the MEMS reflective mirror, and the oscillating mirror are not limited in this application.

In a possible implementation, the scanning system may be located at a waist of the echo light beam transmitted by the transmitting optical module. In this way, a scanning system with a small reflective surface may be used, thereby helping reduce a size of the scanning system, and further helping miniaturize an entire detection apparatus.

B. Processing system

In a possible implementation, the processing system is configured to determine association information of a target based on a first electrical signal from the receiving system. For example, the processing system may determine a distance, an orientation, a posture, grayscale information, or the like of the target based on the first electrical signal.

For example, the processing system may be a circuit having a signal (or data) processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is an application-specific integrated circuit (application-specific integrated circuit, ASIC) or a hardware circuit implemented by a programmable logic device (programmable logic device, PLD), for example, a field programmable gate array (field programmable gate array, FPGA). In the reconfigurable hardware circuit, a process in which the processor loads a configuration file to implement hardware circuit configuration may be understood as a process in which the processor loads instructions to implement functions of some or all of the foregoing units. In addition, the processor may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). For example, the processor may be an application processor (application processor, AP), an image signal processor (image signal processor, ISP), another programmable logic device, a transistor logic device, a hardware component, or any combination thereof.

Based on the foregoing described structure and function principles of the detection apparatus, this application may further provide a terminal device. The terminal device may include the detection apparatus in any one of the foregoing embodiments. For example, the terminal device may be, for example, a vehicle (for example, a driverless vehicle, an intelligent vehicle, an electric vehicle, or a digital vehicle), a robot, a surveying and mapping device, an uncrewed aerial vehicle, an intelligent home device (for example, a television, a robot vacuum cleaner, an intelligent desk lamp, an acoustic system, an intelligent lighting system, an electrical appliance control system, home background music, a home theater system, an intercom system, or video surveillance), an intelligent manufacturing device (for example, an industrial device), intelligent transportation equipment (for example, an AGV, an uncrewed transport vehicle, or a truck), or an intelligent terminal (for example, a mobile phone, a computer, a tablet computer, a palmtop computer, a desktop computer, a headset, an acoustic device, a wearable device, an in-vehicle device, a virtual reality device, or an augmented reality device).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "uniformity" does not mean absolute uniformity, and an engineering error can be allowed. "Vertical" does not mean absolute verticality, and a specific engineering error can be allowed. "At least one" means one or more, and "a plurality of" means two or more. In addition, "and/or" describes an association between associated objects, and represents that three relationships may exist. For example, A and/or B may represent the following cases: Only A exists, both A and B exist, and only B exists, where A and B may be singular or plural. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural. In text descriptions of this application, the character "/" generally represents an "or" relationship between associated objects. In a formula of this application, the character "/" indicates a "division" relationship between associated objects. In addition, the word "for example" in this application is used to represent giving an example, an illustration, or a description. Any embodiment or design scheme described as an "example" in this application should not be explained as being more preferred or having more advantages than another embodiment or design scheme. Alternatively, it may be understood as that the word "example" is used to present a concept in a specific manner, and does not constitute a limitation on this application.

It may be understood that various numbers in this application are merely used for differentiation for ease of description, and are not used to limit the scope of embodiments of this application. The sequence numbers of the foregoing processes do not mean execution sequences, and the execution sequences of the processes should be determined based on functions and internal logic of the processes. The terms "first", "second", and another similar expression are intended to distinguish between similar objects but do not necessarily describe a specific order or sequence. In addition, the terms "include", "have", and any variant thereof are intended to cover non-exclusive inclusion. A method, system, product, or device that includes a series of steps or units is not necessarily limited to those steps or units expressly listed, but may include other steps or units not expressly listed or inherent to such a process, method, system, product, or device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An optical receiving module, comprising a first optical assembly, a stop, and a second optical assembly, wherein the stop is located on an image-space focal plane of the first optical assembly, or is located at a preset distance from an image-space focal plane of the first optical assembly;

   the first optical assembly is configured to focus an echo light beam, and a focused echo light beam is emitted into the second optical assembly through the stop; and

the second optical assembly is configured to propagate the received echo light beam to a detection module.

2. The module according to claim 1, wherein the stop comprises at least one light transmission area; and the light transmission area is used for pass-through of the focused echo light beam.

3. The module according to claim 1 or 2, wherein a shape of the light transmission area is an ellipse; and a ratio of a major axis to a minor axis of the ellipse is greater than or equal to 1 and less than or equal to 4.

4. The module according to claim 1 or 2, wherein a shape of the light transmission area is a circle.

5. The module according to any one of claims 1 to 4, wherein a central location of the light transmission area is related to an incident angle at which the echo light beam is emitted into the first optical assembly.

6. The module according to claim 5, wherein the central location of the light transmission area and the incident angle at which the echo light beam is emitted into the first optical assembly satisfy Formula 1:

$$S = f \times \tan\theta \quad \text{Formula 1,}$$

wherein

f is an equivalent focal length of the first optical assembly, $\theta$ is the incident angle at which the echo light beam is emitted into the first optical assembly, and S is the central location of the light transmission area.

7. The module according to claim 5 or 6, wherein the incident angle at which the echo light beam is emitted into the first optical assembly is a fixed value.

8. The module according to claim 7, wherein the optical receiving module further comprises a third optical assembly; and the third optical assembly is configured to adjust the incident angle at which the echo light beam is emitted into the first optical assembly to the fixed value.

9. The module according to any one of claims 1 to 8, wherein the stop comprises two light transmission areas.

10. The module according to claim 9, wherein the two light transmission areas form an axisymmetric pattern.

11. The module according to any one of claims 2 to 10, wherein the stop further comprises a non-light transmission area, and the non-light transmission area is configured to reflect or absorb stray light other than the echo light beam.

12. The module according to claim 11, wherein the stop comprises any one of the following:

at least one aperture is disposed on a non-transparent thin film, and the aperture is the light transmission area; or
at least one aperture is disposed on a non-transparent plate, and the aperture is the light transmission area; or
a non-light transmission area of a transparent thin film is coated with a non-transparent material; or
a non-light transmission area of transparent glass is coated with a non-transparent material.

13. The module according to claim 12, wherein the non-transparent thin film comprises a Mylar film; or the non-transparent material comprises black ink.

14. The module according to any one of claims 2 to 13, wherein the shape of the light transmission area is consistent with a shape of a light spot of the focused echo light beam.

15. The module according to any one of claims 1 to 14, wherein the first optical assembly comprises at least one first lens; and a first surface of a first lens close to the stop is a concave surface, a second surface of the first lens close to the stop is a convex surface, the first surface is a surface that is of the first lens and that is close to the stop, and the second surface is a surface that is of the first lens and that is away from the stop.

16. The module according to any one of claims 1 to 15, wherein the second optical assembly comprises at least one second lens; and a third surface of a second lens close to the stop is a concave surface, a fourth surface of the second lens close to the stop is a convex surface, the third surface is a surface that is of the second lens and that is close to the stop, and the fourth surface is a surface that is of the second lens and that is away from the stop.

17. The module according to claim 16, wherein the second optical assembly further comprises a reflection assembly.

18. The module according to claim 17, wherein the reflection assembly comprises a reflective prism or a reflective mirror.

19. A receiving system, comprising a detection module and the optical receiving module according to any one of claims 1 to 18, wherein
the detection module is configured to detect the echo light beam from the optical receiving module.

20. The system according to claim 19, wherein the detection module is located at an image-space focal plane of the second optical assembly.

21. A detection apparatus, comprising a transmitting system and the receiving system according to claim 19 or 20, wherein
the transmitting system is configured to transmit a signal light beam, wherein the signal light beam is reflected by a target in a detection area to obtain the echo light beam.

22. The apparatus according to claim 21, wherein the detection apparatus further comprises a scanning system; and
the scanning system is configured to: reflect the signal light beam from the transmitting system to the detection area; and/or reflect the echo light beam to the receiving system.

23. A terminal device, comprising a control apparatus and the detection apparatus according to claim 21 or 22.

Detection
apparatus

Detection
apparatus

Detection
apparatus

FIG. 1

Optical receiving module

First signal
light and
stray light

First optical
assembly

Focused
first signal
light

Stop

First signal
light obtained
by blocking the
stray light

Second
optical
assembly

First signal
light
obtained by
blocking the
stray light

FIG. 2

FIG. 3a

FIG. 3b

FIG. 4

FIG. 5

FIG. 6

FIG. 7

FIG. 8

FIG. 9

Second lens
41

Second lens
42

Second lens
43

Second
optical
assembly

Second lens
44

Reflection
assembly

Second lens
45

Second
direction

First
direction

FIG. 10

FIG. 11

FIG. 12a

Optical receiving module

Second
optical
assembly

Oscillating
mirror

First
optical
assembly

Reflection
assembly

Stop

FIG. 12b

Receiving system

Electrical
signal

Detection
module

Echo light
beam

Optical
receiving
module

Echo light beam
and stray light

FIG. 13a

Echo light beam

(1)

(2)

FIG. 13b

Stop

FIG. 13c

Detection module

Pixel

FIG. 14

FIG. 15a

FIG. 15b

FIG. 16

Third lens 51   Third lens 52   Third lens 53

FIG. 17

## INTERNATIONAL SEARCH REPORT

| International application No. |
| --- |
| **PCT/CN2022/115987** |

### A. CLASSIFICATION OF SUBJECT MATTER

G01S7/486(2020.01)i

According to International Patent Classification (IPC) or to both national classification and IPC

### B. FIELDS SEARCHED

Minimum documentation searched (classification system followed by classification symbols)

G01S17/-; G01S7/-

Documentation searched other than minimum documentation to the extent that such documents are included in the fields searched

Electronic data base consulted during the international search (name of data base and, where practicable, search terms used)

CNTXT; ENTXTC; WPABSC; CNKI; 读秀, DUXIU: 华为技术有限公司, 张绍鹏, 林娇, 刘军, 回波, 激光雷达, 杂散光, 干扰, 环境光, 光阑, 光栏, 像面, 焦面, 焦平面, 焦点, 椭圆; ENTXT; VEN; WPABS: HUAWEI, echo, Laser radar, stray+, parasitic +, ambient+, environment, diaphragm?, ellips+, focal???, focus???

### C. DOCUMENTS CONSIDERED TO BE RELEVANT

| Category* | Citation of document, with indication, where appropriate, of the relevant passages | Relevant to claim No. |
| --- | --- | --- |
| X | CN 106154248 A (SHENZHEN GEDAD TECHNOLOGY CO., LTD.) 23 November 2016 (2016-11-23) description, paragraphs [0031]-[0046], and figures 1-3 | 1-23 |
| X | CN 103217678 A (HEFEI INSTITUTES OF PHYSICAL SCIENCE, CHINESE ACADEMY OF SCIENCES) 24 July 2013 (2013-07-24) description, paragraphs [0006]-[0018], and figure 1 | 1-23 |
| X | CN 110850436 A (HEFEI INSTITUTES OF PHYSICAL SCIENCE, CHINESE ACADEMY OF SCIENCES) 28 February 2020 (2020-02-28) description, paragraphs [0047]-[0077], and figure 1 | 1-23 |
| X | CN 114488077 A (ANHUI TECHNOVO LIDAR TECHNOLOGY CO., LTD.) 13 May 2022 (2022-05-13) description, paragraphs [0037]-[0045], and figures 1-2 | 1-23 |
| X | CN 111398935 A (SUTENG INNOVATION TECHNOLOGY CO., LTD.) 10 July 2020 (2020-07-10) description, paragraphs [0037]-[0047], and figures 1-3 | 1-23 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **26 April 2023** | **05 May 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2022/115987** |

**C.** **DOCUMENTS CONSIDERED TO BE RELEVANT**

| Category* | Citation of document, with indication, where appropriate, of the relevant passages | Relevant to claim No. |
|---|---|---|
| A | CN 114144699 A (CANON INC.) 04 March 2022 (2022-03-04)<br>entire document | 1-23 |
| A | US 2019162827 A1 (RIEGL LASER MEASUREMENT SYSTEMS GMBH.) 30 May 2019 (2019-05-30)<br>entire document | 1-23 |

Form PCT/ISA/210 (second sheet) (July 2022)

**INTERNATIONAL SEARCH REPORT**
Information on patent family members

International application No.

**PCT/CN2022/115987**

| Patent document cited in search report | | | Publication date (day/month/year) | Patent family member(s) | | | Publication date (day/month/year) |
|---|---|---|---|---|---|---|---|
| CN | 106154248 | A | 23 November 2016 | None | | | |
| CN | 103217678 | A | 24 July 2013 | CN | 103217678 | B | 07 January 2015 |
| CN | 110850436 | A | 28 February 2020 | WO | 2021103716 | A1 | 03 June 2021 |
| | | | | US | 2022146641 | A1 | 12 May 2022 |
| | | | | CN | 212275978 | U | 01 January 2021 |
| CN | 114488077 | A | 13 May 2022 | None | | | |
| CN | 111398935 | A | 10 July 2020 | None | | | |
| CN | 114144699 | A | 04 March 2022 | EP | 3978950 | A1 | 06 April 2022 |
| | | | | WO | 2021010383 | A1 | 21 January 2021 |
| | | | | US | 2022113535 | A1 | 14 April 2022 |
| | | | | JP | 2021018228 | A | 15 February 2021 |
| US | 2019162827 | A1 | 30 May 2019 | CA | 3022400 | A1 | 27 May 2019 |
| | | | | US | 11360194 | B2 | 14 June 2022 |
| | | | | AT | 520307 | B1 | 15 March 2019 |
| | | | | EP | 3489715 | A1 | 29 May 2019 |
| | | | | EP | 3489715 | B1 | 16 December 2020 |
| | | | | AT | 520307 | B1 | 15 March 2019 |

Form PCT/ISA/210 (patent family annex) (July 2022)